# EUROPEAN PATENT APPLICATION

(11) **EP 1 978 038 A1**
(43) Date of publication of application: **08.10.2008**
(21) Application number: 07105457.1
(22) Date of filing: 02.04.2007
(51) Int. Cl.: C08F 2/48

(54) **A method for producing a coating by atmospheric pressure plasma technology**

(71) Applicant: Vlaamse Instelling voor Technologisch Onderzoek (VITO), 2400 Mol (BE)
(72) Inventor: Dubreuil, Marjorie, B-3560 LUMMEN (BE); Vangeneugden, Dirk, B-3630 OPGRIMBIE (BE); Wasbauer, Ingrid, B-3600 GENK (BE); Issaris, Anna, B-3590 DIEPENBEEK (BE)
(74) Representative: pronovem

(57) **Abstract**

The present invention is related to a method of coating a substrate, said method comprising the steps of:
- providing a substrate (1),
- producing an atmospheric pressure plasma discharge in the presence of a gas,
- at least partially exposing the substrate to said atmospheric pressure plasma discharge,
- introducing a liquid aerosol (6) of coating forming material into said atmospheric pressure plasma discharge, thereby forming a coating on the substrate,
- curing the substrate and coating, by exposing the substrate to ultraviolet light.

## Description

### Field of the Invention

The present invention is related to methods for coating a substrate by atmospheric pressure plasma technology.

### State of the Art

In many applications the mechanical, chemical or physical properties of surfaces of materials play an important role. If certain requirements can not be met by the bulk of the material, the application of coatings and surface modification are convenient methods for improving the properties. In this way, many substrates can be refined and used in new applications. In many cases, for special applications, other functional properties have to be improved, e.g. hardness, chemical resistance, electrical resistivity, barrier properties or optical appearance.

A commonly used method for the modification of the surface properties of a substrate and/or to produce coatings on a substrate is to submit the substrate to a low-pressure plasma treatment. In particular, it is known to use a polymerizable pre-cursor (also called a monomer) as the coating forming material, and to introduce said precursor into a plasma discharge, where polymerization takes place to form a polymer coating on the substrate. Low-pressure plasma has the disadvantage of requiring highly cost-effective reactors and therefore large investments for industrializing the process. An improvement to this has been the use of atmospheric-pressure plasma. However, also when the latter technique is used, depending on the type of materials and process parameters, coating instability can be a problem. Coating instability can occur when a polymerizable pre-cursor is deposited on a surface but not converted fully during plasma coating.

Document EP1326718B1 describes the use of atmospheric plasma under a uniform glow regime to deposit an atomized liquid and/or solid coating-forming material. The coatings are essentially siloxane-based materials. The problem of coating instability is not addressed.

Document WO03089479 describes the use of plasma as a curing method for the polymerization of a composition comprising free-radical polymerizable compounds. The compositions are mainly based on acrylate compounds, mono or multi-functional while a photoinitiator may be added to enhance the photopolymerization. The mentioned composition is coated on a particular substrate and placed in a vacuum plasma-reactor where the photopolymerization takes place due to the UV light generated by the plasma. Again, coating instability in the sense described above is not mentioned

Document JP9241409 describes the use of atmospheric-pressure for the plasma treatments of polyolefin and poly(ethylene terephtalate) substrates using a fluorocarbon gas. UV-treatment of the substrate is mentioned, wherein 'vacuum ultraviolet' is used. This is UV-light with a wavelength of 200nm or shorter.

In document US6126776, a method is described where a low pressure plasma treatment or UV treatment is used to generate free radicals on a substrate. The precursors (cyanoacrylate and/or isocyanate) are introduced before, during or after radical formation, under a vapour form.

### Aims of the Invention

The present invention aims to provide a method of coating a substrate by means of an atmospheric pressure plasma deposition process, provided with an additional step aimed at stabilizing the obtained coating, and the coating characteristics.

### Summary of the Invention

The present invention is related to a method of coating a substrate, said method comprising the steps of:
- providing a substrate,
- producing an atmospheric pressure plasma discharge in the presence of a gas,
- at least partially exposing the substrate to said atmospheric pressure plasma discharge,
- introducing a liquid aerosol of coating forming material into said atmospheric pressure plasma discharge, thereby forming a coating on the substrate,
- curing the substrate and coating, by exposing the substrate to ultraviolet light.

The UV-curing step preferably takes place under UV-light with a wavelength between 290nm and 400nm. The UV post-curing step ensures the conversion of precursor material which has not yet been converted into polymer material during the plasma coating step, ensuring an increased stability of the coating, as well as additional cross-linking, thereby enhancing the strength and durability of the obtained coating. The radiation dose of the UV light is preferably in the range of 5 to 500mJ/cm².

The step of exposing the substrate to the plasma discharge can be initiated before the step of introducing the coating forming material, i.e. with a time interval between the start of the substrate's exposure to the plasma and the start of the coating forming material introduction in the plasma. In that case, the substrate is subjected to a pre-treatment by the plasma discharge, in order to clean the surface and to generate free radicals on the surface to be coated. Alternatively, the steps of exposing the substrate to the plasma discharge and introducing the coating forming material are initiated essentially at the same moment.

The coating forming material is preferably a type of polymerizable pre-cursor, or a mixture of several types of polymerizable pre-cursors. Many different types of precursors can be used according to the targeted application, for example : increase of the adhesive, release, gas barrier, moisture barrier, electrical and thermal conductivity, optical, hydrophilic, hydrophobic, oleophobic properties of a given substrate. The pre-cursor is preferably chosen from the group consisting of : allyl compounds, alkyne compounds, vinyl compounds, alkylacrylate, alkyl-methacrylate, fluorinated alkylacrylate, fluorinated alkylmethacrylate. Additionally, a photoinitiator or a mixture of photoinitiators can be added to the precursor mixture, increasing the reactivity of the mixture during plasma treatment due to the generation of UV-light by the plasma. The injection of the pre-cursor(s) in the form of an aerosol allows a better control of the precursor injection.

With an appropriate choice of photoinitiator(s), the plasma UV-absorbance spectrum is covered. In this case, a combination of two types of radical generation takes place, the first one being the formation of radicals by the plasma, the second one being the creation of radicals due to the scission of the photoinitiator(s). The combination of these two phenomena increases the reactivity of the substrate and the precursor(s) in the plasma zone. The amount of not-yet reacted photoinitiator can further react under the UV-lamp during the post-curing.

Additionally, multi-functional polymerizable compounds may be added to the precursor to increase the cross-linking density, enhancing the coating's stability.

Examples of the substrate to be submitted to the surface treatment of the invention may be plastics, such as polyethylene, polypropylene, or polyolefin copolymers, or cyclic olefin copolymers, polystyrene and polystyrene derivatives, polycarbonate, polyethylene terephtalate, polybutylene terephtalate, acrylic resins, polyvinyl chloride, polyamide, polysulfone, poly(vinylidene fluorine) or its copolymers, poly(tetrafluoroethylene) and its copolymers, poly(vinylidene chloride) and its copolymers, cellulose, polylactic acid, polycaprolactone, polycaprolactam, polyethylene glycol, metals, glass, ceramics, paper, composite materials, textiles, wood, but are not limited to these examples.

According to the preferred embodiment, the plasma discharge is generated by a known Dielectric Barrier Discharge (DBD) technique, in a gas which can be He, Ar, N₂, CO₂, O₂, N₂O, H₂ or a mixture of two or more of these.

### Brief Description of the Drawings

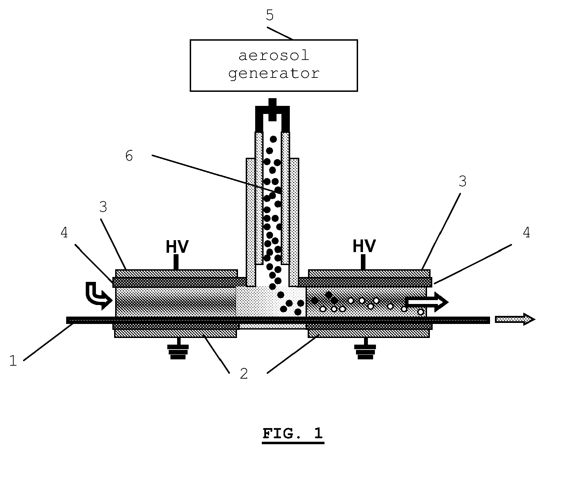

Fig. 1 represents a schematic view of the preferred set-up for performing the method of the invention.

### Detailed Description of preferred embodiments of the Invention

With reference to figure 1, the substrate 1 is placed on the lower - grounded - electrode 2, of a DBD plasma installation, which further comprises an upper high voltage electrode 3. At least one of said electrodes is covered with a dielectric barrier 4. In the case of figure 1, both electrodes are covered by a dielectric and the substrate is placed on the dielectric covering the lower electrode. If applicable, the activation pre-treatment step is preferably carried out under a nitrogen atmosphere, but other gasses such as helium, argon, carbon dioxide or mixture of gasses also with oxygen, hydrogen can be used. The frequency during pre-treatment is preferably comprised between 1 and 100kHz, preferably between 1 and 50 kHz, and most preferably lower than 5 kHz. The gas flow is comprised between 5 and 100slm (standard liter per minute), more preferably between 10 and 60slm. The activation pre-treatment step is carried out for a time from a few seconds till several minutes at a power of maximum 2W/cm².

For the treating (coating) step, the frequency is preferably comprised between 1 and 100kHz, more preferably between 1 and 50 kHz, and most preferably lower than 5 kHz. The gas flow is comprised between 5 and 100slm, more preferably between 10 and 60slm. The power is preferably not higher than 10W/cm², preferably not higher than 2W/cm², and most preferably between 0.1 and 0.3 W/cm². The coating forming material 5 is injected from an aerosol generator 5, under the form of a liquid aerosol 6. Figure 1 shows a continuous process, wherein substrate 1 is treated while it is being fed continuously through the reactor. In the embodiment shown, the aerosol is injected in a middle part of the discharge zone. This allows the substrate to be pre-treated in the first part of the discharge zone, and coated in the second part. Other set-ups (including non-continuous) may be present within the scope of the invention.

The coating forming material is a polymerizable precursor (i.e. a free-radical polymerizable compound). Suitable precursors include acrylates, methacrylates and other vinyl compounds such as styrene, α-methylstyrene, methacrylonitriles, vinyl acetate, or other vinyl derivatives, methyl methacrylate, ethyl methacrylate, propyl methacrylate, butyl methacrylate, and other alkyl methacrylates, and the corresponding acrylates, including organofunctional methacrylates and acrylates, including glycidyl methacrylate, trimethoxysilyl propyl methacrylate, allyl methacrylate, hydroxyethyl methacrylate, hydroxypropyl methacrylate, dialkylaminoalkyl methacrylates, and fluoroalkyl (meth) acrylates, methacrylic acid, acrylic acid, , , vinyl halides, such as vinyl chlorides and vinyl fluorides, acrylonitrile, methacrylonitrile, acrylamide, such as N-isopropylacrylamide, methacrylamide.
Other suitable precursors include allyl compounds such as allyl amine, allyl alcohol, alkenes and dienes, halogenated alkenes and fluorinated alkenes, for example perfluoroalkenes, ethylene, propylene, vinylidene halides, butadienes. Alkyne compounds can also be used.
A mixture of different free-radical polymerizable compounds may be used, for example to tailor the physical properties of the substrate coating for a specified need. The precursor can contain multi-functional compounds, dienes, multi-functional acrylates such as 1.6- hexanediol diacrylate, pentaerythritol penta/hexa-acrylate, trimethylolpropane ethoxylate triacrylate, etc....

Additionally, a photoinitiator, can be used to enhance the reactivity. Examples of photoinitiators which can be activated by plasma discharge are free-radical photoinitiators, photolatent acids and photolatent bases. Examples of free-radical photoinitiators are camphorquinone, benzophenone and derivatives thereof, acetophenone, and also acetophenone derivatives, for example a-hydroxyacetophenones, e. g. a-hydroxycycloalkylphenyl ketones, especially (1hydroxycyclohexyl)-phenyl ketone, or2-hydroxy-2-methyl-1-phenyl-propanone ; dialkoxyacetophenones, e. g. 2,2-dimethoxy-1, 2-diphenylethan-1-one ; or a-aminoacetophenones, e. g.(4-methylthiobenzoyl)-1-methyl-1-morpholino-ethane, (4-morpholino-benzoyl)-1-benzyl-1-dimethylamino-propane ;4-aroyl-1, 3-dioxolanes ; benzoin alkyl ethers and benzil ketals, e. g. benzil dimethyl ketal ; phenylglyoxalates and derivatives thereof, e. g. dimeric phenyl- glyoxalates, siloxane-modified phenyl glyoxalates ; peresters, e. g. benzophenonetetra- carboxylic acid peresters, monoacylphosphine oxides, e. g. (2,4,6-trimethylbenzoyl)-phenyl-phosphine oxide; bisacylphosphine oxides, e. g. bis (2,6-dimethoxybenzoyl)- (2, 4, 4-trimethyl-pent-1-yl) phosphine oxide, bis (2,4, 6-trimethyl- benzoyl)-phenyl-phosphine oxide or bis (2,4,6-trimethylbenzoyl)-(2, 4-dipentyloxyphenyl)- phosphine oxide; trisacylphosphine oxides;halomethyltriazines, e. g.2- [2- (4-methoxy-phenyl)-vinyl]-4, 6-bis-trichloromethyl- [1, 3,5] triazine, 2- (4-methoxy-phenyl)-4, 6-bis-trichloro- methyl- [1, 3,5] triazine,2- (3, 4-dimethoxy-phenyl)-4, 6-bis-trichloromethyl- [1, 3,5] triazine, 2-methyl-4, 6-bis-trichloromethyl- [1, 3,5]triazine.

The coating deposition is carried out during a time from a few seconds till several minutes according to the desired thickness and the targeted application.

The coated substrate is then submitted to UV radiation, preferably with a wavelength comprised between 290 and 400nm. The radiation dose is preferably in the range of 5 to 500mJ/cm² and the curing time varies from a few seconds to several minutes.

The method can be performed in various types of installations. According to one embodiment, the plasma treatment and coating steps are performed in a suitable plasma installation, for example an installation as described in W02005/095007 (included by reference) after which the substrate is transferred to a UV-installation. The latter can be a UV conveyor, for example of the type AktiPrint T (Sadechaf Technologies), which was used in the examples described further in the text. Other set-ups can be imagined by the skilled person.

Examples of the substrate to be submitted to the surface treatment of the invention may be plastics, such as polyethylene, polypropylene, or polyolefin copolymers, or cyclic olefin copolymers, polystyrene and polystyrene derivatives, polycarbonate, polyethylene terephtalate, polybutylene terephtalate, acrylic resins, polyvinyl chloride, polyamide, polysulfone, poly(vinylidene fluorine) or its copolymers, poly(tetrafluoroethylene) and its copolymers, poly(vinylidene chloride) and its copolymers, cellulose, polylactic acid, polycaprolactone, polycaprolactam, polyethylene glycol, metals, glass, ceramics, paper, composite materials, textiles, wood, but are not limited to these examples.

### Examples

### Example 1.

The plasma treatment is carried out in a specially designed parallel plates installation at 1.5kHz. A sheet of poly(ethylene terephtalate) of 20x30cm² is placed on the lower electrode of the installation. The activation step is carried out under nitrogen at a flow of 40slm, for 30 seconds at a power of 0.8 W/cm². The power is lowered to 0.15 W/cm² and ethyl hexyl acrylate is then injected under the form of an aerosol in the plasma zone under a nitrogen flow of 20slm. The coating deposition is carried out during 2 minutes. The coated substrate is then subjected to UVA (>320nm) radiation at a power of 120mJ/cm², during a time of about 60s.

### Example 2.

As described in example 1, the substrate is first submitted to an activation step under nitrogen at a flow of 40slm, for a 30 seconds at a power of 0.8 W/cm². The power is lowered to 0.15 W/cm² and a mixture of ethyl hexyl acrylate (90w.%) and pentaerythritol penta/hexa acrylate (10w.%) is then injected under the form of an aerosol in the plasma zone under a nitrogen flow of 20slm. The coating deposition is carried out during 2 minutes. The coated substrate is then subjected to UVA radiation at a power of 120mJ/cm².

### Example 3.

As described in example 1, the substrate is first submitted to an activation step under nitrogen at a flow of 40slm, for a 30 seconds at a power of 0.8 W/cm². The power is lowered to 0.15 W/cm² and a mixture of ethyl hexyl acrylate (90w.%), pentaerythritol penta/hexa acrylate (8w.%), 4-(dimethylamino)benzophenone (1w.%) and 4-(hydroxyl)benzophenone is then injected under the form of an aerosol in the plasma zone under a nitrogen flow of 20slm. The coating deposition is carried out during 2 minutes. The coated substrate is then subjected to UVA radiation at a power of 120mJ/cm².

## Claims

1. A method of coating a substrate, said method comprising the steps of:
- providing a substrate (1),
- producing an atmospheric pressure plasma discharge in the presence of a gas,
- at least partially exposing the substrate to said atmospheric pressure plasma discharge,
- introducing a liquid aerosol (6) of coating forming material into said atmospheric pressure plasma discharge, thereby forming a coating on the substrate,
- curing the substrate and the coating, by exposing the substrate to ultraviolet light.

2. The method according to claim 1, wherein the wavelength of said UV light is comprised between 290nm and 400nm.

3. The method according to claim 1 or 2, wherein the UV-radiation dose during said curing step is comprised between 5 and 500mJ/cm².

4. The method according to any one of claims 1 to 3, wherein said substrate is pre-treated by said plasma discharge, prior to the introduction of the coating forming material.

5. The method according to any one of claims 1 to 4, wherein said coating forming material comprises a polymerizable pre-cursor, or a mixture of several types of polymerizable pre-cursors.

6. The method according to claim 5, wherein said polymerizable pre-cursor(s) is chosen from the group consisting of a vinyl compound, an allyl compound, an alkyne compound, an acrylate or fluorinated acrylate, a methacrylate and a fluorinated methacrylate.

7. The method according to claim 5 or 6, wherein said coating forming material further comprises a photo-initiator.

8. The method according to any one of the preceding claims, wherein said plasma discharge is a dielectric barrier discharge.

9. The method according to any one of the preceding claims, wherein said gas is chosen from the group consisting of He, Ar, N₂, CO₂, O₂, N₂O, H₂ or a mixture of two or more of these.
